Europäisches Patentamt

European Patent Office

Office européen des brevets

(19)

(11) Publication number: **0 093 582**
**B1**

(12) **EUROPEAN PATENT SPECIFICATION**

(45) Date of publication of patent specification: **16.04.86**

(51) Int. Cl.⁴: **G 11 B 7/08**

(21) Application number: **83302405.2**

(22) Date of filing: **28.04.83**

(54) **Scanning servo system for optical-disc information reproducing apparatus.**

(30) Priority: **30.04.82 JP 72741/82**

(43) Date of publication of application:
**09.11.83 Bulletin 83/45**

(45) Publication of the grant of the patent:
**16.04.86 Bulletin 86/16**

(84) Designated Contracting States:
**DE FR GB NL**

(56) References cited:
**EP-A-0 062 465**
**GB-A-2 029 051**
**US-A-3 474 418**

**Patent Abstracts of Japan Vol. 3, no. 21, 21
February 1979 Page 99E92 & JP-A-53-149003**

(73) Proprietor: **Kabushiki Kaisha Toshiba
72, Horikawa-cho Saiwai-ku
Kawasaki-shi Kanagawa-ken 210 (JP)**

(72) Inventor: **Nabeshima, Daiki c/o Patent Division
Tokyo Shibaura Denki K. K. 72, Horikawa-cho
Saiwai-ku Kawasaki-shi Kanagawa-ken (JP)**
Inventor: **Nakane, Hiroshi c/o Patent Division
Tokyo Shibaura Denki K. K. 72, Horikawa-cho
Saiwai-ku Kawasaki-shi Kanagawa-ken (JP)**

(74) Representative: **Newstead, Michael John et al
Haseltine Lake & Co. 28 Southampton Buildings
Chancery Lane
London, WC2A 1AT (GB)**

Courier Press, Leamington Spa, England.

## Description

This invention relates to a scanning servo system for optical-disc information reproducing apparatus.

In an optical-disc of the type presently used with a DAD (Digital Audio Disc) player or a video disc player, audio or video information is recorded in optically coded form as a series of recesses or pits which are formed in the information carrying face of the optical-disc and arranged in either a single spiral track or a plurality of concentric tracks about the centre axis of the optical-disc. The audio or video information thus recorded is reproduced by optically scanning the individual recesses or pits along the spiral track or the concentric tracks by means of a convergent spot of laser light which detects the lengths and spacings between the scanned recesses or pits. During reproduction, the optical-disc is usually rotated about the centre axis thereof at a constant linear velocity (CLV) or a constant angular velocity (CAV), and the convergent spot of laser light is displaced radially relative to the optical-disc by a tracking device or a pick-up unit which is a part of the DAD or video disc player. The laser beam is directed to a selected track location and reflected by the information carrying face of the optical-disc or is passed through the optical-disc. The beam of light thus reflected by or passed through the optical-disc is then converted into an electric signal by means of a photoelectric transducer mounted on the pick-up unit so as to facilitate further conversion into an audio or video signal.

In order to reproduce the information recorded on the optical-disc, it is necessary that the convergent spot of laser light be precisely applied to the selected track location on the optical-disc. To this end, optical-disc information reproducing apparatus has employed a method wherein a light beam, exclusively used for scanning, is generated separately from the light beam used for reproducing the audio or video information signal, and a photoelectric transducer for detecting the scanning light beam is used to effect scanning control. Another method has been also employed wherein the audio or video information signal and the scanning signal are all extracted with a single light beam. According to the latter method, the photoelectric transducer includes a plurality of photodetecting units, for example four units. An image of a pit or recess formed by the aid of the single light beam is thus converted into respective electric signals by the four photodetecting units. The signals from the four photodetecting units are then converted into signals carrying audio or video information, focusing error information and tracking error information. The scanning error information signal, that is the focusing error information signal and tracking error information signal, thus detected are introduced into a focusing actuator and a tracking actuator for driving an objective lens mounted on the pick-up unit vertically and radially relative to the optical-disc to apply the convergent spot to the selected track location accurately. Thus the scanning servo, that is the focusing servo and the tracking servo for the convergent spot of laser light, is established.

Generally, the focusing actuator and the tracking actuator are required to have relatively high response characteristics for making the convergent spot strictly follow quick fluctuations of the selected track location in a usual reproduction condition. When, however, there happen "dropouts" in the focusing error information signal and the tracking error information signal as a servo signal due to dust or scars on the optical-disc, the focusing actuator and the tracking actuator with high response characteristics mistakingly make the convergent spot jump out from the selected track location. The focusing or the tracking servo system is apt to get out of control when its servo signal has been missed more than a certain time. The time or the allowable time for dropout is variable in response to the response characteristics of the servo system to its input. The allowable time for dropout becomes shorter in a servo system with high response characteristics, but comes longer in a servo system with low response characteristics. From this, the above malfunction of the scanning servo system is able to be prevented by lowering the response characteristics. Therefore, conventional focusing and tracking servo systems have been designed to be varied as regards their response characteristics in response to a detection of a dropout of information.

In a conventional scanning servo system for optical-disc information reproducing apparatus, the focusing actuator and the tracking actuator have been varied as regards their response characteristics for every detection of a dropout of information. The conventional scanning servo system has, however, had some drawbacks. That is, the convergent spot still apts to jump out from the selected track location, because the focusing actuator and the tracking actuator fail to be varied as regards their response characteristics during some short period at a leading portion of the dropout of information. If the drawback is prevented by restricting the higher response characteristics of the focusing actuator and the tracking actuator, the conventional scanning servo system would have another drawback in that the focusing actuator and the tracking actuator fail to make the convergent spot follow very quick fluctuations of the selected track location relative to the convergent spot, caused by, for example, a mechanical shock against the DAD or video disc player.

It is, therefore, an object of the present invention to provide an optical-disc information reproducing apparatus for reliably performing scanning control of a convergent spot of laser light along a selected track location, both for a presence of information and a dropout of information.

According to the present invention, there is provided a scanning servo system for an optical-disc information reproducing apparatus in which information stored on an optical-disc as a series of recesses or pits arranged in concentric tracks or in a single spiral track is read out during rotation of the optical-disc by a scanning spot of a light beam, the system comprising: a light source for generating the light beam used for reading out the information as an optical signal; means for applying the scanning spot of the light beam to a selected track location; a transducer for converting the optical signal into an electric signal; means for controlling said scanning spot applying means in response to the electric signal, thereby causing the scanning spot to scan the selected track location accurately, said controlling means being variable in its response characteristics in response to the electric signal; and means for detecting a dropout of the information on the selected track locations and generating signals responsive to said dropouts of information, characterised in that the system includes: means for delaying said signals responsive to said dropouts of information for one rotation period of the optical-disc; and means for lowering temporarily the response characteristics of said controlling means in response to the delayed signals responsive to said dropouts of information.

The present invention will now be described, by way of example, with reference to the accompanying drawings, in which:—

Figure 1 is a schematic block diagram showing a circuit arrangement of a preferred embodiment of an optical-disc information reproducing apparatus according to the present invention;

Figure 2 is a partial view of an optical-disc schematically showing a number of track location adjacent each other and covered with dust or scars;

Figure 3 is a block diagram showing in detail the delay section of the circuit arrangement of Figure 1;

Figure 4 is a graph showing various waveforms appearing in the circuit arrangement of Figures 1 and 3;

Figure 5 to Figure 10 are block diagrams showing in detail modifications of the circuit arrangement of Figure 3; and

Figure 11 is a graph showing a relationship between a reproducing time elapsed and a rotation period of the optical-disc.

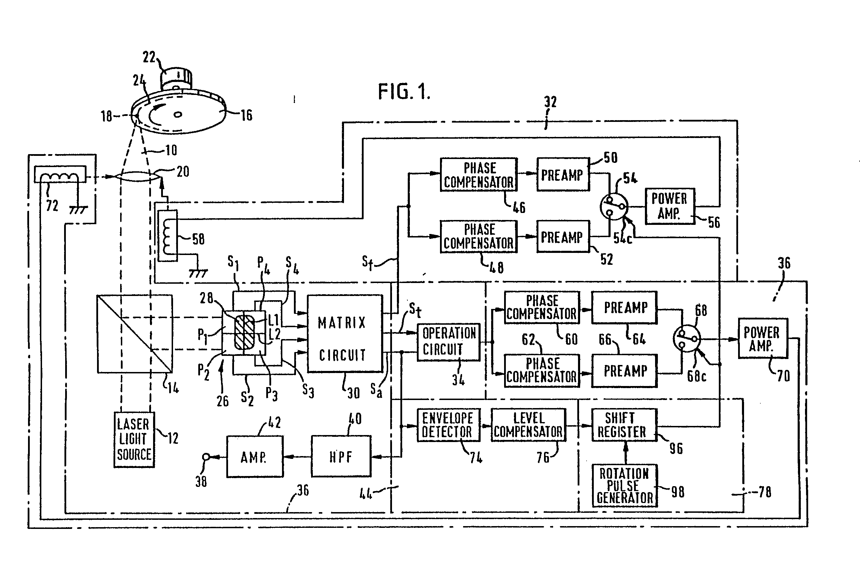

In Figure 1, parts which are not relevant to the control of the apparatus are omitted from the illustration. A light beam 10 emerging from a laser light source (such as a He/Ne laser) 12 passes through a beam splitter 14. Beam 10 converges at a point on an optical-disc 16, termed the convergent spot 18, by means of an objective lens 20. Optical-disc 16, that is the DAD or the video disc, is rotated at a CLV in the DAD player or at a CAV in the video disc player by a motor 22. There are provided on optical-disc 16 a single spiral track or a plurality of concentric tracks 24 bearing information relating to audio signals or video signals, etc., which have been recorded in coded form at high density. The optically stored information is to be read out by scanning the single spiral track or the concentric tracks 24 on optical-disc 16 by the use of convergent spot 18.

At convergent spot 18 of light beam 10, the information on a certain selected track 24 location is read in the form of changes in the reflection factor of the light beam 10 due to a series of recesses or pits representing the coded information of the audio or video signal. The reflected light beam returns to objective lens 20 and is separated from the entrance beam by beam splitter 14. The reflected light beam 10 is then guided to a photoelectric transducer 26 so that light beam 10, having reached photoelectric transducer 26, becomes a detector spot bearing image 28 of the pit or recess.

Photoelectric transducer 26 is divided into four individual photodetection portions corresponding to four regional elements P1, P2, P3 and P4 that are divided by a boundary line L1 longitudinal to an image of the tracking direction and by a boundary line L2 perpendicular to the image of the tracking direction. Image 28 is placed on or displaced from longitudinal line L1 according to convergent spot 18 scanning the selected track 24 location with an accurate or an inaccurate tracking. Image 28 is also placed on or displaced from perpendicular line L2 according to convergent spot 18 scanning the selected track 24 location with an accurate or an inaccurate focusing. Individual photodetection elements P1, P2, P3 and P4 respectively output electric signals S1, S2, S3 and S4 varying in accordance with the areas of elements P1, P2, P3 and P4 overlapped by image 28.

Signals S1, S2, S3 and S4 are matrixed by a matrix circuit 30 and then differently combined into three signals: an audio or video information carrying signal Sa; a tracking information carrying signal St; and a focusing information carrying signal Sf. Signal Sa is formed by the addition of all of detection signals S1 to S4. Signal St is formed by the subtraction of two subcombinations, which are respectively the addition of detection signals S1 and S3 from elements P1 and P3 and the addition of detection signals S2 and S4 from elements P2 and P4. Elements P1 and P3 are orthogonal to each other and thus form a combination obliquely disposed to the track image. Elements P2 and P4 are also orthogonal to each other and thus form another combination obliquely disposed to the track image. Signal Sf is formed by the subtraction of two subcombinations, which are respectively the addition of detection signals S1 and S2 from elements P1 and P2 and the addition of detection signals S3 and S4 from elements P3 and P4. Elements P1 and P2 are adjacent each other across perpendicular boundary line L2. Elements P3 and P4 are also adjacent across perpendicular boundary line L2.

Focusing information carrying signal Sf is applied to a focusing control section 32, and is used for a focusing error signal. Tracking information carrying signal St is applied to an operation circuit 34 together with audio or video information carry-

ing signal S*a*. Operation circuit 34 compares tracking information carrying signal S*t* with audio or video information carrying signal S*a* as regards their phases and generates a tracking error signal S*te*. Tracking error signal S*te* is able to be differently generated, from only tracking information carrying signal S*t*, as disclosed in co-pending European Patent Application No. 83301077.0. Tracking error signal S*te* from operation circuit 34 is then applied to a tracking control section 36. Audio or video information carrying signal S*a* is further applied to an output terminal 38 through a high pass filter 40 and an amplifier 42, and thus used for audio or video signal reproduction. Audio or video information carrying signal S*a* is further applied to an information dropout detecting section 44 for detecting a dropout of audio or video information signal S*a* during convergent spot 18 scanning the selected track 24 location and for use in generating a signal responsive to the dropout of information. This signal D is applied to focusing control section 32 and tracking control section 36 for varying the response characteristics thereof to focusing error signal S*fe* and tracking error signal S*te*.

Focusing control section 32 includes phase compensators 46 and 48 connected to matrix circuit 30 in parallel with each other, high gain and low gain preamplifiers 50 and 52 respectively connected in series to phase compensators 46 and 48, a selector switch 54 connected between preamplifiers 50 and 52, a power amplifier 56 connected to selector switch 54 and an actuator 58 connected to power amplifier 56 for driving objective lens 20 so as to move convergent spot 18 in a direction vertical to optical-disc 16. Tracking control section 36 includes phase compensators 60 and 62 connected to operation circuit 34 in parallel with each other, high gain and low gain preamplifiers 64 and 66 respectively connected in series to phase compensators 60 and 62, a selector switch 68 connected between amplifiers 64 and 66, a power amplifier 70 connected to selector switch 68 and an actuator 72 connected to power amplifier 70 for driving objective lens 20 so as to move convergent spot 18 in a direction radial to optical-disc 16. Phase compensators 46 and 48 in focusing control section 32 and phase compensators 60 and 62 in tracking control section 36 respectively change the frequency-to-phase characteristics of focusing control section 32 and tracking control section 36 as suitable as regards their high or low response characteristics. Information dropout detecting section 44 includes an envelope detector 74 connected to matrix circuit 30 and a level comparator 76 connected to envelope detector 74. Signal D responsive to the dropout of information, that is, an output of information dropout detecting section 44, is applied to a delay section 78 for delaying signal D for one rotation period of optical-disc 16 and thence to respective control terminals 54*c* and 68*c* of selector switches 54 and 68.

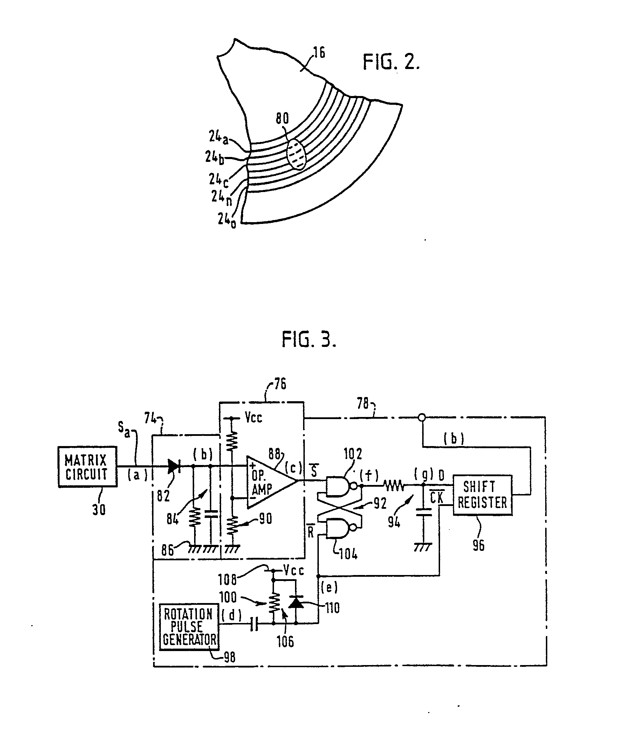

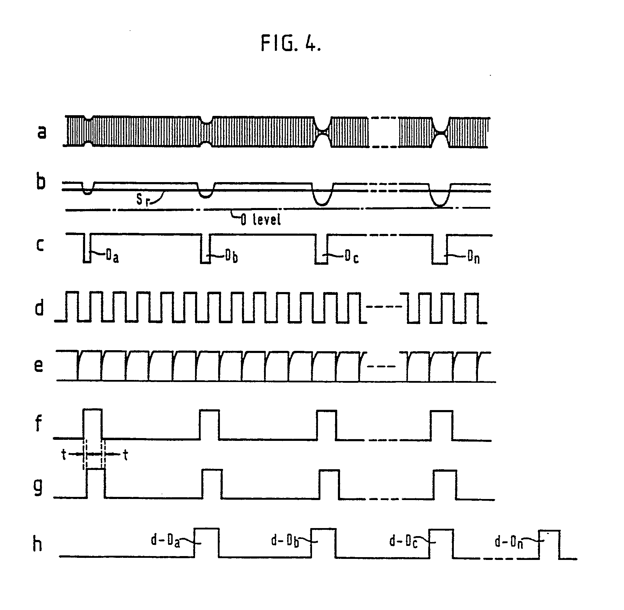

The operations of focusing servo and tracking servo for convergent spot 18 will be explained hereinafter with reference Figures 1, 2 and 4. When dust or a scar 80 with some shape and area clings to or is made on a surface of optical-disc 16 as shown in Figure 2, a number of tracks 24*a*, 24*b*, 24*c* . . . 24*n* adjacent each other are covered over some parts of their lengths by dust or scar 80. In Figure 2, the respective tracks are drawn with large gaps therebetween for the sake of explanation, but the tracks on actual DADs or video discs are arranged with a very high density. Accordingly, when convergent spot 18 scans tracks 24*a*, 24*b*, 24*c* . . . 24*n* in turn, photoelectric transducer 26 fails to detect the information on the parts of tracks covered by dust or scar 80. In this condition, audio or video information carrying signal S*a* from matrix circuit 30 has a waveform *a* as shown in Figure 4. Signal S*a* is decreased as regards its positive and negative amplitudes for every transit time of dust or scar 80 along the parts of tracks 24*a*, 24*b*, 24*c* . . . 24*n*. One of the envelopes, for example the positive envelope of waveform *a*, is detected by envelope detector 74 so that a signal with a waveform *b* as shown in Figure 4 is applied from envelope detector 74 to level comparator 76. The signal with waveform *b* is compared with a reference level signal S*r* in level comparator 76. Then a pulse train *c* as shown in Figure 4 is generated from level comparator 76. Pulse train *c* has pulse signals D*a*, D*b*, D*c* . . . D*n* responsive to the dropouts of information, respectively having pulse widths corresponding to the transit times of dust or scar 80 along the parts of tracks 24*a*, 24*b*, 24*c* . . . 24*n*. Pulse signals D*a*, D*b*, D*c* . . . D*n* responsive to the dropouts of information in pulse train *c* occur in every rotation of optical-disc 16 in response to the dropouts of information from tracks 24*a*, 24*b*, 24*c* . . . 24*n* due to dust or scar 80. Each pulse signal D*a*, D*b*, D*c* . . . D*n* responsive to the dropout of information is applied to delay section 78 in turn.

In delay section 78, each pulse signal D*a*, D*b*, D*c* . . . D*n* responsive to the dropout of information is increased to a predetermined pulse width or period and is delayed by one rotation of optical-disc 16. Delayed pulse signals *d*-D*a*, *d*-D*b*, *d*-D*c* . . . *d*-D*n* responsive to the dropouts of information in a pulse train *h* as shown in Figure 4 are applied to control terminals 54*c* and 68*c* of respective selector switches 54 and 68. Selector switches 54 and 68 connect low gain preamplifiers 52 and 66 to power amplifiers 56 and 70 in response to delayed pulse signals *d*-D*a*, *d*-D*b*, *d*-D*c* . . . *d*-D*n*. Otherwise, selector switches 54 and 68 connect high gain preamplifiers 50 and 64 to power amplifiers 56 and 70.

During the connections of low gain preamplifiers 52 and 66 to power amplifiers 56 and 70 due to delayed pulse signals *d*-D*a*, *d*-D*b*, *d*-D*c* . . . *d*-D*n*, focusing control section 32 and tracking control section 36 are varied to have relatively low response characteristics to inputs due to their low gain conditions. Therefore, focusing control section 32 and tracking control section 36 are maintained with the low response characteristics for the predetermined periods covering enough of the respective transit times of dust or scar 80 along tracks 24b, 24c, ... 24n so that focusing actuator 58 and tracking actuator 72 are prevented from making convergent spot 18 of light beam 10 jump out of the selected track 24a, 24b, 24c ... 24n location.

As to the first track 24a in the tracks having dust or scar 80, focusing control section 32 and tracking control section 36 are maintained with the high response characteristics, or fail to connect low gain preamplifiers 52 and 66 to power amplifiers 56 and 70. On the other hand, focusing control section 32 and tracking control section 36 are changed to have low response characteristics in response to delayed pulse signal d-Dn during reproduction of a track 24o next to the last track 24n in the tracks having dust or scar 80. As to track 24a, the transit time of dust or scar 80 is limited to a very short period less than the allowable time of the focusing servo system and the tracking servo system with high response characteristics. Because end portions of usual dust or scars in any directions get narrower and terminate. Therefore, the first track 24a in the tracks having dust or scar 80 has always a very short part covered by dust or scar 80. Thus, focusing actuator 58 and tracking actuator 72 are able to make convergent spot 18 of light beam 10 follow the part of track 24a covered by dust or scar 80 without fail. As to track location 24o, focusing control section 32 and tracking control section 36 are operated at low response characteristics by the short period corresponding to the predetermined pulse width of delayed pulse signal d-Dn. Therefore, a chance of a disturbance making the operations of focusing control section 32 and tracking control section 36 suffer in the short period may be almost disregarded.

Referring now to Figure 3, one embodiment of a circuit portion including information dropout detecting section 44 and delay section 78 will be described in detail. In Figure 3, envelope detector 74 conventionally includes a rectifier or diode 82 connected between the output terminal of matrix circuit 30 for audio or video information carrying signal Sa and the input terminal of level detector 76, and a smoothing circuit 84 connected between the cathode of diode 82 and a reference potential source 86. In envelope detector 74 thus formed, audio or video information carrying signal Sa with waveform a as shown in Figure 4 is rectified and then smoothed so that the positive envelope signal with waveform b shown in Figure 4 is obtained on an output terminal thereof. The envelope signal with waveform b is applied to level comparator 76. Level comparator 76 includes an operational amplifier 88 connected by its non-inverting input terminal to the output terminal of envelope detector 74 and a reference level signal source 90 connected to the inverting input terminal of operational amplifier 88. In level comparator 76 thus formed, the positive envelope signal with waveform b from envelope detector 74 is applied to the non-inverting input terminal of operational amplifier 88 and compared with a reference level signal Sr applied from reference level signal source 90 to the inverting input terminal of operational amplifier 88. Then, pulse train c having pulse signals Da, Db, Dc ... Dn responsive to the dropouts of information as shown in Figure 4 is produced from an output terminal of operational amplifier 88.

Pulse train c with pulse signals Da, Db, Dc ... Dn is applied to delay section 78. Delay section 78 includes a flip-flop 92, a phase-lag circuit 94, a shift register 96, a rotation pulse generator 98 responsive to the rotation speed of optical-disc 16 and a trailing edge detector 100. Flip-flop 92 comprises two NAND gates 102 and 104. One input terminal of NAND gate 102 or a SET input terminal of flip-flop 92 receives pulse signals Da, Db, Dc ... Dn from level comparator 76. On the other hand, rotation pulse generator 98 is responsive to the rotation of optical-disc 16 and generates a pulse train d as shown in Figure 4 with a predetermined integral number of pulses, for example seventy-two (72) pulses per one rotation of optical-disc 16. Pulse train d is applied to trailing edge detector 100. Trailing edge detector 100 comprises a differentiation circuit 106 comprising a positive reference potential source 108 and a diode 110 connected in the reverse direction between an output terminal of differentiation circuit 106 and a positive reference potential source 108. Then, a pulse train e is produced with pulses adjoining with each other in coincidence with each trailing edge of the pulses of pulse train d from rotation pulse generator 98.

Pulse train e is applied to one input terminal of NAND gate 104 (a RESET input terminal of flip-flop 92). Then, a pulse train f as shown in Figure 4 is produced from an output terminal of NAND gate 102 (an output terminal of flip-flop 92). Pulses in pulse train f have leading edges coincident with respective leading edges of corresponding pulse signals Da, Db, Dc ... Dn in pulse train c. Trailing edges of the pulses in pulse train f are coincident with trailing edges of some pulses in pulse train e, which are applied to flip-flop 92 concurrently with respective pulse signals Da, Db, Dc ... Dn in pulse train c. In the case of a certain pulse signal responsive to the dropout of information being extended to two or more pulses in pulse train e, a corresponding pulse in pulse train f has a trailing edge coincident with the trailing edge of the last pulse of the two or more pulses in pulse train e.

Pulse train f thus produced is applied to a phase-lag circuit 94 which is conventionally formed of an integrating circuit. In phase-lag circuit 94, respective pulses in pulse train f are lagged by a predetermined period t. Then, a pulse train g with the lagged pulses as shown in Figure 4 appears on an output terminal of phase-lag circuit 94. Pulse train g is applied to a D input terminal of a shift register 96. On the other hand, pulse train e on the output terminal of trailing edge detector 100 is applied to a CK input terminal of shift register 96. Shift register 96 comprises the same number of register units or flip-flops as the above-mentioned integral number, for example seventy-two (72), referred to in connection with rotation pulse generator 98. Therefore, the respective pulses in pulse train $g$ are sequentially applied to the D input terminal of shift register 96 and then shifted in response to each application of a pulse in pulse train $e$ to the CK input terminal of shift register 96. Then, pulse train $h$ described with reference to Figures 1 and 2 appears on an output terminal of shift register 96. That is, delayed responsive pulse signals $d$-D$a$, $d$-D$b$, $d$-D$c$ ... $d$-D$n$ respectively appear when the predetermined integral number of pulses in pulse train $e$ have been applied to the CK input terminal of shift register 96 after the pulses in pulses train $g$, which correspond respectively to pulse signals D$a$, D$b$, D$c$ ... D$n$ in pulse train $c$ responsive to the dropouts of information, have been applied to the D input terminal of shift register 96. In other words, delayed responsive pulse signals $d$-D$a$, $d$-D$b$, $d$-D$c$ ... $d$-D$n$ respectively appear on the output terminal of shift register 96 after each rotation of optical-disc 16 from the occurrences of respective pulse signals D$a$, D$b$, D$c$ ... D$n$ in pulse train $c$ responsive to the dropouts of information.

Further, respective delayed pulse signals $d$-D$a$, $d$-D$b$, $d$-D$c$ ... $d$-D$n$ in pulse train $h$ responsive to the dropouts of information have a predetermined width wider than corresponding pulse signals D$a$, D$b$, D$c$ ... D$n$ in pulse train $c$ responsive to the dropouts of information, because an output potential on the output terminal of shift register 96 (or a Q output terminal of the last stage flip-flop of shift register 96) turns to a high potential state or a low potential state at a time when the leading edge of a certain pulse in pulse train $e$ has been applied to the CK input terminal of shift register 96. Therefore, respective pulse signals $d$-D$a$, $d$-D$b$, $d$-D$c$ ... $d$-D$n$ responsive to the dropouts of information are able to maintain focusing control section 32 (Figure 1) and tracking control section 36 (Figure 1) with low response characteristics for periods more than the transit periods of dust or scar 80 along tracks 24$b$, 24$c$, etc.

The widths of delayed pulse signals $d$-D$a$, d-D$b$, $d$-D$c$ ... $d$-D$n$ responsive to the dropouts of information are each the period that optical-disc 16 rotates by 5 degrees in angle, if rotation pulse generator 98 is to generate seventy-two pulses per one rotation of optical-disc 16. Rotation pulse generator 98 is able to generate the pulses by various conventional methods, for example a method of detecting a frequency component in the reverse voltage of a motor for driving optical-disc 16; a method of detecting commutation sparks of a DC motor for driving optical-disc 16; a method of detecting a radial stripes pattern formed on a disc rotating together with optical-disc 16; or a method of detecting a synchronising signal recorded together with the audio or video information signal on optical-disc 16.

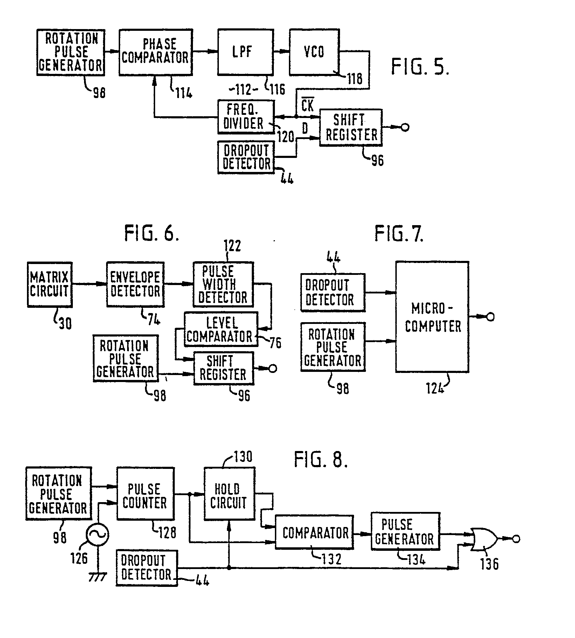

Referring now to Figures 5 to 11, a number of modifications of Figure 3 will be explained hereinafter. In Figure 5, shift pulses for shift register 96 are applied from rotation pulse generator 98 through a phase-locked loop (referred to as PLL hereinafter) 112. Rotation pulse generator 98 generates a small integral number of pulses, for example one pulse per one rotation of optical-disc 16. The pulses from rotation pulse generator 98 are applied to PLL 112. PLL 112 includes a phase comparator 114 connected by an input terminal to rotation pulse generator 98, a low pass filter (referred to as LPF hereinafter) 116 connected by an input terminal to phase comparator 114, a voltage controlled oscillator (referred to as VCO hereinafter) 118 connected by an input terminal to LPF 116 and a frequency divider 120 connected by an input terminal to VCO 118 and by an output terminal to another input terminal of phase comparator 114. An output terminal of VCO 118 is also connected to the CK input terminal of shift register 96. To the D input terminal of shift register 96, information dropout detecting section 44 is connected. Frequency divider 120 divides pulses in a pulse train applied from VCO 118 so that both input signals to phase comparator 114 agree with each other in frequency. The oscillation frequency of VCO 118 is controlled by the signal from rotation pulse generator 98 so as to oscillate a relatively large integral number of pulses per one rotation of optical-disc 16. In the above modification, rotation pulse generator 98 may be made with simple construction because rotation pulse generator 98 need not generate a large number of pulses per one rotation of optical-disc 16.

In the modification shown in Figure 6, information dropout detecting section 44 includes envelope detector 74, a pulse width detector 122 connected by an input terminal to envelope detector 74 and level comparator 76 connected by an input terminal to pulse width detector 122. Pulse width detector 122 yields signals responsive to the dropouts of information, when widths of deformed portions of the envelope of waveform $a$ (Figure 4) are wider then a predetermined width. Therefore, in the case of the transit periods of dust or scar 80 along tracks 24$a$, 24$b$, 24$c$ ... 24$n$ (Figure 2) being shorter than the allowable period of focusing control section 32 and tracking control section 36 with high response characteristics, focusing control section 32 and tracking control section 36 are maintained in the high response characteristics condition in spite of dust or scar 80.

In the modification of Figure 7, information dropout detecting section 44 and rotation pulse generator 98 are both connected to a microcomputer or microprocessor 124 suitably programmed. The signals responsive to the dropouts of information from information dropout detecting section 44 are stored in microcomputer 124 and shifted by pulses applied from rotation pulse generator 98.

In the modification of Figure 8, delay section 78 comprises a clock generator 126, a pulse counter 128 connected by an input terminal to clock generator 126 and by another input terminal to rotation pulse generator 98, a hold circuit 130 connected by its D input terminal to an output terminal of pulse counter 128 and by its RESET input terminal to information dropout detecting section 44, a comparator 132 connected by an input terminal to hold circuit 130 and by another input terminal to pulse counter 128, a pulse generator 134 connected by an input terminal to comparator 132 and an OR gate 136 connected by its input terminals to pulse generator 134 and information dropout detecting section 44 respectively and by an output terminal to focusing control section 32 and tracking control section 36.

Rotation pulse generator 98 produces one pulse per one rotation of optical-disc 16. Pulse counter 128 is reset to its initial state by every pulse from rotation pulse generator 98 and then starts its operation to count clock signals from clock generator 126. Hold circuit 130 holds the count value at pulse counter 128 when the first signal D$a$ of the signals responsive to the dropouts of information due to dust or scar 80 is applied from information dropout detecting section 44. The count value held in hold circuit 132 is released when the second signal D$b$ of the signals responsive to the dropouts of information due to dust or scar 80 is applied. The released count value from hold circuit 130 is applied to the first input terminal of comparator 132 and then compared with the count value from pulse counter 128. When the released count value from hold circuit 130 and the count value from pulse counter 128 agree with each other, a signal is produced from comparator 132 and then applied to pulse generator 134. Pulse generator 134 produces a pulse with a predetermined width. The pulses generated from pulse generator 134 are equivalent to delayed signals $d$-D$a$, d-D$b$, $d$-D$c$ ... $d$-D$n$ responsive to the dropouts of information due to dust or scar 80 since each count value held in hold circuit 130 is released at the timing of the following signal responsive to the dropout of information being applied. The pulses equivalent to delayed signals $d$-D$a$, $d$-D$b$, $d$-D$c$ ... $d$-D$n$ are applied to focusing control section 32 and tracking control section 36 through OR gate 136. Further, the first signal D$a$ responsive to the dropout of information is directly applied to focusing control section 32 and tracking control section 36 through OR gate 136 so that focusing control section 32 and tracking control section 36 are able to cope with the first dropout of information.

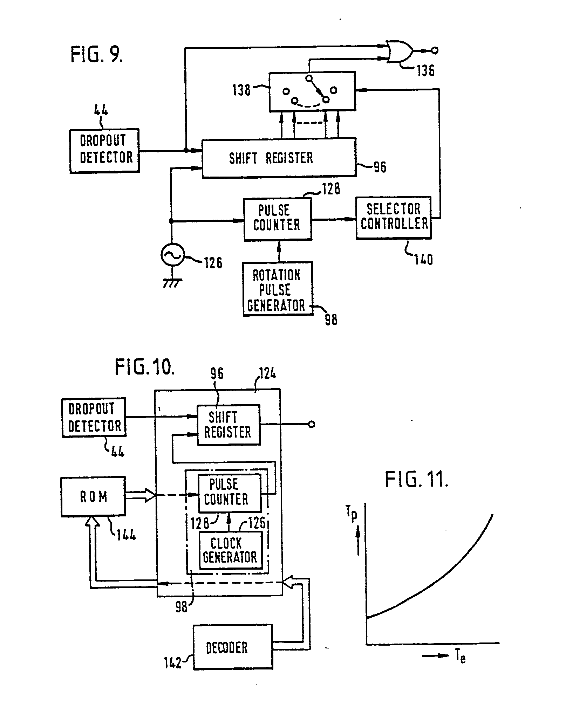

In the modification of Figure 9, delay section 78 includes a multiple output shift register 96 connected by its D input terminal to dropout information detecting section 44 and by its CK input terminal to clock generator 126. Multiple output terminals of shift register 96 respectively connect output terminals of register units or flip-flops in shift register 96 to corresponding select terminals of a shift-steps selector 138. Shift-steps selector 138 is connected by its common terminal to one input terminal of OR gate 136. OR gate 136 is connected by its other input terminal to dropout information detecting section 44 and by its output terminal to focusing control section 32 and tracking control section 36. Clock generator 126 is further connected to pulse counter 128. Pulse counter 128 is connected by its RESET input terminal to rotation pulse generator 98 and by an output terminal to a control terminal of shift-steps selector 138 through a selector controller 140.

Stored data in shift register 96 is sequentially shifted by clock pulses with predetermined width from clock generator 126. On the other hand, the clock pulses are counted in pulse counter 128. Rotation pulse generator 98 generates one pulse per one rotation of optical-disc 16. The pulses from rotation pulse generator 98 reset the count operation of pulse counter 128 to its initial state. Selector controller 140 controls the location of the select contact of shift-steps selector 138 in response to the counting value in pulse counter 128. The select contact location of shift-steps selector 138 is controlled so that the shift-steps in shift register 96 selected by shift-steps selector 138 agree with the counting value in pulse counter 128. Accordingly, the shift-step in shift register 96 is varied in response to the rotation period of optical-disc 16. When optical-disc 16 is rotated with a relatively high rotation speed or with a relatively short rotation period in accordance with reproduction of inner tracks, the shift-steps are selected to be relatively small. On the other hand, when the disc is rotated with a relatively slow speed or with a relatively long rotation period in accordance with reproduction of outer tracks, the shift-steps are selected to be relatively large. Then, delayed pulse signals responsive to the dropouts of information from shift register 96 are maintained with constant width related to the pulse width of the clock pulse, independently of the selected track location on optical-disc 16. Further, the signals responsive to the dropouts of information are directly applied to focusing control section 32 and tracking control section 36 through OR gate 136 so that focusing control section 32 and tracking control section 36 are able to cope with the first signal responsive to the dropout of information.

In the modification of Figure 10, shift register 96 and rotation pulse generator 98 of delay circuit 78 are entirely formed in microcomputer or microprocessor 124 suitably programmed. Rotation pulse generator 98 formed in microcomputer 124 includes clock generator 126 and pulse counter 128 connected by its D input terminal to clock generator 126 and by an output terminal to the CK input terminal of shift register 96. Microcomputer 124 is further connected to a decoder 142 which is connected to output terminal 38 (Figure 1) for decoding the audio or video information carrying signal S$a$ and a ROM (Read Only Memory) 144.

As is well known, optical-discs, for example DADs, are recorded with information relating to the reproduction time elapsed, together with the audio or video information. A DAD is further regulated to be rotated with CLV. Accordingly, the rotation period Tp of a DAD is variable in response to the reproduction time elapsed Te as shown by the graph of Figure 11. Therefore, the rotation period Tp of optical-disc 16 at a certain track location is obtained from the reproduction time elapsed Te. Microcomputer 124 processes the information carrying the reproduction time elapsed Te from decoder 142 and applies a signal relating to the reproduction time elapsed Te to ROM 144. ROM 144 produces control data in response to the signal relating to the reproduction time elapsed Te and applies the control data to the RESET input terminal of pulse counter 128. Then, pulse counter 128 produces pulses relating to the rotation period Tp of disc 16 and applies the pulses to the CK input terminal of shift register 96. The count value equivalent to the pulses of rotation pulse generator 98 in Figure 1 is applied to the CK input terminal of shift register 96 so that delayed signals responsive to the dropouts of information are obtained from the output terminal of shift register 96.

**Claims**

1. A scanning servo system for an optical-disc information reproducing apparatus in which information stored on an optical-disc (16) as a series of recesses or pits arranged in concentric tracks (24) or in a single spiral track is read out during rotation of the optical-disc by a scanning spot (18) of a light beam (10), the system comprising: a light source (12) for generating the light beam used for reading out the information as an optical signal; means (20) for applying the scanning spot of the light beam to a selected track location; a transducer (26) for converting the optical signal into an electric signal; means (32, 36) for controlling said scanning spot applying means (20) in response to the electric signal, thereby causing the scanning spot to scan the selected track location accurately, said controlling means being variable in its response characteristics in response to the electric signal; and means (44) for detecting a dropout of the information on the selected track locations and generating signals (Da—Dn) responsive to said dropouts of information, characterised in that the system includes: means (78) for delaying said signals responsive to said dropouts of information for one rotation period of the optical-disc; and means (54, 68) for lowering temporarily the response characteristics of said controlling means in response to the delayed signals responsive to said dropouts of information.

2. A scanning servo system according to claim 1, characterised in that said delaying means includes a register (96) for storing said signal responsive to said dropout of information and means for detecting one rotation period of the optical-disc and for triggering said register to output the stored signal responsive to said dropout of information after one rotation period of the optical-disc.

3. A scanning servo system according to claim 2, characterised in that said register and said one rotation period detecting means are formed by a microcomputer (124).

4. A scanning servo system according to claim 2 or 3, characterised in that it further comprises means (92) for increasing the signal width of the signals responsive to said dropouts of information.

5. A scanning servo system according to claim 4, characterised in that said increasing means includes means connected to said one rotation period detecting means for generating an integral number of pulses each of the same width divided equally in the one rotation period of the optical-disc by the same integral number for each rotation of the optical-disc, and a flip-flop (92) having its set input connected to said transducer and its reset input connected to said pulse generating means.

6. A scanning servo system according to claim 5, characterised in that said register (96) is a shift register having shift-steps of the integral number.

7. A scanning servo system according to claim 6, characterised in that it further includes means (138) for changing the integral number between a small number for a relatively short period of one rotation of the optical-disc and a large number for a relatively long period of one rotation of the optical-disc.

8. A scanning servo system according to claim 7, characterised in that said one rotation period detecting means (124) is adapted for detecting one rotation period of the optical-disc by a time signal related to a reproduction time elapsed, the time signal being extracted from a signal recorded on the optical-disc.

9. A scanning servo system according to claim 7, characterised in that said one rotation period detecting means is adapted for detecting one rotation period of the optical-disc by detecting a rotation speed of the optical-disc.

10. A scanning servo system according to claim 7, 8 or 9, characterised in that said controlling means (32, 36) includes an amplifier (50, 52, 64, 66) for amplifying the electric signal and an actuator (58, 72) for driving said scanning spot applying means by the amplified electric signal, and wherein the gain of said amplifier responsive to the response characteristics of said controlling means is lowered in response to the signal responsive to said dropout of information through said delaying means.

11. A scanning servo system according to claim 10, characterised in that said controlling means are further provided with a phase compensating circuit (46, 48, 60, 62) for changing the frequency-to-phase characteristics thereof in response to the gain of said amplifier.

12. A scanning servo system according to any preceding claim, characterised in that said scanning spot applying means (20) is means for focusing the scanning spot to the selected track location.

13. A scanning servo system according to claim 12, characterised in that said focusing means is an objective lens.

14. A scanning servo system according to claim 13, characterised in that said scanning spot controlling means includes an actuator (58) for driving said objective lens in a direction vertical to the optical-disc so as to focus the scanning spot at the surface of the selected track location.

15. A scanning servo system according to claim 13 or 14, characterised in that said scanning spot controlling means includes an actuator (72) for driving said objective lens in a direction radial to the optical-disc so as to move the position of the scanning spot to the selected track location.

**Patentansprüche**

1. Servo-Abtastsytem für ein mit einer optischen Scheibe arbeitendes Informationswiedergabegerät, bei dem die auf der optischen Scheibe (16) als eine Reihe von in konzentrischen Spuren (24) oder in einer einzigen spiraligen Spur angeordneten Vertiefungen oder Pits gespeicherte Information während der Rotation der optischen Scheibe (16) mit Hilfe eines von einem Lichtstrahl (10) erzeugten Abtastpunkts (18) ausgelesen wird, mit einer Lichtquelle (12) zur Erzeugung des Lichtstrahls (10) für das Auslesen der Information als optisches Signal, mit Mitteln (20) zum Anlegen des aus dem Lichtstrahl abgeleiteten Abtastpunkts an eine ausgewählte Spurposition, mit einem Wandler (26) zum Umwandeln des optischen Signals in ein elektrisches Signal, mit Steuerungsmitteln (32, 36), durch die die genannten Mittel (20) zum Anlegen des Abtastpunkts derart steuerbar sind, daß die ausgewählte Spurposition exakt abgetastet wird, wobei diese Steuerungsmittel (32, 36) in Abhängigkeit von dem elektrischen Signal in ihrer Ansprechempfindlichkeit veränderbar sind, sowie mit Mitteln (44) zur Detektion von Informationsausfällen (dropouts) auf den ausgewählten Spurpositionen und zur Erzeugung von diesen Informationsausfällen entsprechenden Signalen ($D_A$—$D_n$), gekennzeichnet durch Verzögerungsmittel (78) zur Verzögerung der genannten von den Informationsausfällen abhängigen Signale ($D_a$—$D_{nD}$) um eine Umdrehungsperiode der optischen Scheibe und Mittel (54, 68) zum zeitweiligen Absenken der Ansprechempfindlichkeit der genannten Steuerungsmittel (32, 36) in Abhängigkeit von den von den Informationsausfällen abhängigen verzögerten Signalen.

2. Servo-Abtastsytem nach Anspruch 1, dadurch gekennzeichnet, daß die Verzögerungsmittel (78) ein Register (96) zur Speicherung des den Informationsausfällen entsprechenden Signals sowie Mittel beinhaltet, die eine Umdrehungsperiode der optischen Scheibe detektieren und das Register derart triggern, daß es das gespeicherte, den Informationsausfällen entsprechende Signal nach einer Umdrehungsperiode der optischen Scheibe ausgibt.

3. Servo-Abtastsytem nach Anspruch 2, dadurch gekennzeichnet, daß das Register (96) und die Mittel zur Detektion einer Umdrehungsperiode von einem Mikrocomputer (124) gebildet sind.

4. Servo-Abtastsytem nach Anspruch 2 oder 3, dadurch gekennzeichnet, daß ferner Mittel (92) zur Vergrößerung der Signalbreite der den Informationsausfällen entsprechenden Signale vorgesehen sind.

5. Servo-Abtastsytem nach Anspruch 4, dadurch gekennzeichnet, daß die Mittel zur Vergrößerung der Signalbreite folgende Einrichtungen umfassen: mit den Mitteln zur Detektion einer Umdrehungsperiode verbundene Impulserzeugungsmittel zur Erzeugung einer ganzen Zahl von Impulsen jeweils gleicher Breite, die in der einen Umdrehungsperiode der optischen Scheibe gleich verteilt sind, wobei die ganze Zahl für jede Umdrehung der optischen Scheibe dieselbe ist, sowie ein Flip-Flop (92), dessen Setz-Eingang mit dem genannten Wandler und dessen Rücksetz-Eingang mit den Impulserzeugungsmitteln verbunden ist.

6. Servo-Abtastsytem nach Anspruch 5, dadurch gekennzeichnet, daß das Register (96) ein Schieberegister mit einer der ganzen Zahl entsprechenden Zahl von Schiebeschritten ist.

7. Servo-Abtastsytem nach Anspruch 6, gekennzeichnet durch Mittel (138) zur Änderung der genannten ganzen Zahl zwischen einer kleinen Zahl für eine vergleichsweise kurze und einer großen Zahl für eine vergleichsweise lange Umdrehungsperiode der optischen Scheibe.

8. Servo-Abtastsytem nach Anspruch 7, dadurch gekennzeichnet, daß die Mittel (124) zur Detektion einer Umdrehungsperiode derart ausgebildet sind, daß sie eine Umdrehungsperiode der optischen Scheibe mittels eines auf die verflossene Wiedergabezeit bezogenen Zeitsignals detektieren, das von einem der optischen Scheibe aufgezeicheten Signal extrahiert wird.

9. Servo-Abtastsytem nach Anspruch 7, dadurch gekennzeichnet, daß die Mittel zur Detektion einer Umdrehungsperiode derart ausgebildet sind, daß sie eine Umdrehungsperiode der optischen Scheibe aus deren Rotationsgeschwindigkeit detektieren.

10. Servo-Abtastsytem nach Anspruch 7, 8 oder 9, dadurch gekennzeichnet, daß die Steuerungsmittel (32, 36) einen Verstärker (50, 52, 64, 66) zur Verstärkung des elektrischen Signals sowie eine Antriebseinrichtung (58, 72) für den Antrieb der Mittel zum Anlegen des Abtastpunkts durch das verstärkte elektrische Signal umfassen, und daß der Verstärkungsgrad des die Ansprechempfindlichkeit der Steuerungsmittel bestimmenden Verstärkers in Abhängigkeit von dem den Informationsausfällen entsprechenden Signal über die Verzögerungsmittel absenkbar ist.

11. Servo-Abtastsytem nach Anspruch 10, dadurch gekennzeichnet, daß die Steuerungsmittel ferner eine Phasenkompensationsschaltung (46, 48, 60, 62) zur Änderung ihrer Frequenz-Phasen-Charakteristik in Abhängigkeit von dem Verstärkungsgrad des Verstärkers beinhalten.

12. Servo-Abtastsytem nach einem der vorhergehenden Ansprüche, dadurch gekennzeichnet, daß die Mittel (20) zum Anlegen des Abtastpunkts von einer Einrichtung zur Fokussierung des Abtastpunkts auf der ausgewählten Spurposition gebildet sind.

13. Servo-Abtastsytem nach Anspruch 12, dadurch gekennzeichnet, daß die Einrichtung zur Fokussierung des Abtastpunkts ein Objektiv ist.

14. Servo-Abtastsytem nach Anspruch 13, dadurch gekennzeichnet, daß die Mittel zur Steuerung des Abtastpunkts eine Antriebseinrichtung (58) umfassen, durch die das Objektiv zur Fokussierung des Abtastpunkts auf der Oberfläche der ausgewählten Spurposition senkrecht zur optischen Scheibe bewegbar ist.

15. Servo-Abtastsytem nach Anspruch 13 oder 14, dadurch gekennzeichnet, daß die Mittel zur Steuerung des Abtastpunkts eine Antriebseinrichtung (72) umfassen, durch die das Objektiv zur Bewegung des Abtastpunkts in die ausgewählte Spurposition in einer radial zur optischen Scheibe verlaufenden Richtung antreibbar ist.

## Revendications

1. Système de balayage asservi pour appareil de reproduction d'information à disque optique dans lequel de l'information mémorisée sur un disque optique (16) sous la forme d'une série d'évidements ou creux disposés dans des pistes concentriques (24) ou dans une seule piste en spirale est lue pendant la rotation du disque optique par un spot de balayage (18) d'un faisceau de lumière (10), le système comprenant: une source lumineuse (12) pour engendrer le faisceau de lumière utilisé pour lire l'information en tant que signal optique; des moyens (20) pour appliquer le spot de balayage du faisceau de lumière à un emplacement de piste choisi; un transducteur (26) pour convertir le signal optique en un signal électrique; des moyens (32, 36) pour commander les moyens d'application (20) du spot de balayage en réponse au signal électrique, amenant ainsi le spot de balayage à balayer exactement l'emplacement de piste choisi, ces moyens de commande étant variables quant à leurs caractéristiques de réponse en réponse au signal électrique; et des moyens (44) pour détecter une chute de l'information sur les emplacements de piste choisis et engendrer des signaux (Da à Dn) répondant à ces chutes d'information, caractérisé en ce que le système comprend: des moyens (78) pour retarder les signaux en réponse aux chutes d'information pendant une période de rotation du disque optique; et des moyens (54, 68) pour abaisser temporairement les caractéristiques de réponse des moyens de commande en réponse aux signaux retardés répondant aux chutes d'information.

2. Système de lecture asservi selon la revendication 1, caractérisé en ce que les moyens de retard comprennent un registre (96) pour mémoriser le signal répondant à la chute d'information et des moyens pour détecter une période de rotation du disque optique et pour déclencher le registre de façon qu'il donne comme sortie le signal mémorisé répondant à la chute d'information, après une période de rotation du disque optique.

3. Système de lecture asservi selon la revendication 2, caractérisé en ce que le registre et les moyens de détection d'une période de rotation sont formés par un microordinateur (124).

4. Système de lecture asservi selon l'une des revendications 2 ou 3, caractérisé en ce qu'il comprend en outre des moyens (92) pour augmenter la largeur de signal des signaux répondant aux chutes d'information.

5. Système de lecture asservi selon la revendication 4, caractérisé en ce que les moyens d'augmentation comprennent des moyens reliés aux moyens de détection d'une période de rotation pour engendrer un nombre entier d'impulsions, chacune de la même largeur, divisées également dans l'unique période de rotation du disque optique par le même nombre entier pour chaque rotation du disque optique, et une bascule (92) ayant son entrée d'armement reliée au transducteur et son entrée de réarmement reliée aux moyens générateurs d'impulsions.

6. Système de lecture asservi selon la revendication 5, caractérisé en ce que le registre (96) est un registre à décalage présentant des étapes de décalage en nombre égal au nombre entier.

7. Système de lecture asservi selon la revendication 6, caractérisé en ce qu'il comprend en outre des moyens (138) pour modifier le nombre entier entre un petit nombre pour une période de rotation relativement courte du disque optique et un grand nombre pour une période de rotation relativement longue du disque optique.

8. Système de lecture asservi selon la revendication 7, caractérisé en ce que les moyens de détection d'une période de rotation (124) sont conçus pour détecter une période de rotation du disque optique par un signal de temps lié à un temps de reproduction écoulé, le signal de temps étant extrait d'un signal enregistré sur le disque optique.

9. Système de lecture asservi selon la revendication 7, caractérisé en ce que les moyens de détection d'une période de rotation sont conçus pour détecter une période de rotation du disque optique en détectant une vitesse de rotation du disque optique.

10. Système de lecture asservi selon les revendications 7, 8 et 9, caractérisé en ce que les moyens de commande (32, 36) comprennent un amplificateur (50, 52, 64, 66) pour amplifier le signal électrique et un organe d'actionnement (58, 72) pour exciter les moyens d'application de spot de balayage par le signal électrique amplifié, et dans lequel le gain de l'amplificateur, en réponse aux caractéristiques de réponse des moyens de commande, diminue en réponse au signal répondant à la chute d'information par l'intermédiaire des moyens de retard.

11. Système de lecture asservi selon la revendication 10, caractérisé en ce que les moyens de commande sont en outre munis d'un circuit de compensation de phase (46, 48, 60, 62) pour modifier leurs caractéristiques fréquence-phase en réponse au gain de l'amplificateur.

12. Système de lecture asservi selon l'une des revendications précédentes, caractérisé en ce que les moyens d'application de spot de balayage (20) sont des moyens de mise au point du spot de balayage sur l'emplacement de piste choisi.

13. Système de lecture asservi selon la revendication 12, caractérisé en ce que les moyens de mise au point sont une lentille d'objectif.

14. Système de lecture asservi selon la revendication 13, caractérisé en ce que les moyens de commande du spot de balayage comprennent un organe d'actionnement (58) pour entraîner la lentille d'objectif dans une direction perpendiculaire au disque optique de manière à mettre au point le spot de balayage à la surface de l'emplacement de piste choisi.

15. Système de lecture asservi selon les revendications 13 et 14, caractérisé en ce que les moyens de commande de spot de balayage comprennent un organe d'actionnement (72) pour entraîner la lentille d'objectif dans une direction radiale au disque optique de manière à déplacer la position du spot de balayage vers l'emplacement de piste choisi.

FIG. 1.

FIG. 2.

FIG. 3.

# FIG. 4.

FIG. 5.

```
ROTATION          PHASE
PULSE      →   COMPARATOR   →   LPF   →   VCO
GENERATOR
   98          114          -112-  116        118

                        FREQ.      CK      SHIFT
                        DIVIDER   ←        REGISTER
                              120  D              96

                        DROPOUT
                        DETECTOR
                              44
```

FIG. 6.

```
MATRIX        ENVELOPE        PULSE
CIRCUIT   →   DETECTOR   →    WIDTH
                             DETECTOR
    30           74            122

                             LEVEL
                           COMPARATOR
                                     76

            ROTATION         SHIFT
            PULSE       →    REGISTER
            GENERATOR
                98             96
```

FIG. 7.

```
DROPOUT
DETECTOR
    44
              MICRO-
           COMPUTER
ROTATION
PULSE
GENERATOR
    98           124
```

FIG. 8.

```
ROTATION              HOLD
PULSE    →   PULSE →  CIRCUIT
GENERATOR    COUNTER
   98                   130
   126          128

              COMPARATOR  →  PULSE     →
                            GENERATOR
DROPOUT          132          134          136
DETECTOR
    44
```

FIG. 9.

FIG. 10.

FIG. 11.